Europäisches Patentamt

European Patent Office

Office européen des brevets

(19)

(11) Publication number: **0 071 424**
A1

(12) # EUROPEAN PATENT APPLICATION

(21) Application number: **82303885.6**

(22) Date of filing: **22.07.82**

(51) Int. Cl.³: **A 01 D 53/02**
**A 01 D 55/20**

(30) Priority: **24.07.81 GB 8122999**

(43) Date of publication of application:
**09.02.83 Bulletin 83/6**

(84) Designated Contracting States:
**BE DE FR GB LU NL**

(71) Applicant: **Birmid Qualcast (Home & Garden
Equipment) Limited
Coleridge Street Sunnyhill
Derby DE3 7JT(GB)**

(72) Inventor: **Wright, Raymond G. W.
14 Willow Way
Hauxton Cambridgeshire CB2 5JB(GB)**

(74) Representative: **Sanders, Peter Colin
Christopher et al,
BROOKES & MARTIN High Holborn House 52/54 High
Holborn
London WC1V 6SE(GB)**

(54) **Cylinder lawnmowers.**

(57) A cutting cylinder for a lawnmower consists of a plurality of discrete cutting elements (11) disposed on a shaft (10) and progressively staggered around the shaft so that the two sets of diametrically opposed blades (11a to 11ℓ) simulate two helical blades. The blades consist of generally rectangular plates and cooperate with a fixed bottom blade (15). Each blade imparts a discrete impulse to the grass cuttings so that the cuttings are impelled either directly forwards or directly backwards (depending on the sense of rotation) into a grass collection box.

Fig.2.

EP 0 071 424 A1

CYLINDER LAWNMOWERS

Cylinder lawnmowers may have either forward or rear grass collection. Forward grass collection is more effective since grass is thrown forward from the top of the cutting cylinder, but it suffers from the disadvantage that a grass collection box at the front of the mower can be a hindrance when mowing close to obstacles such as flower beds, trees or walls.

With rear grass collection, the grass cuttings are ejected from the bottom of the cutting cylinder with a lower velocity and therefore tend to build up in the front of the collection box. More importantly, in both front and rear collection arrangements, there is a strong tendency for grass cuttings to collect on one side of the grass collection box due to the natural twist of the helical cutting blades which throw the grass to one side. It is therefore necessary to stop mowing and manually redistribute the grass cuttings in the collection box at frequent intervals, especially with rear grass collection.

In accordance with the present invention there is provided a cutter for a lawnmower, the cutter being rotatable about a generally horizontal axis and comprising a plurality of discrete cutting elements disposed across the width of the cutter, each element describing a discrete segment of a body of revolution, such as a cylinder, generated by a straight line.

The elements are preferably staggered around the axis of the cutter in a predetermined sequence such that each element is brought in turn to its respective cutting position as the cutter is rotated.

The staggering may be a regular progressive staggering to simulate one or more helical blades, or it may be irregular. In either case it is preferably arranged so that the individual cuts of each element closely follow one another to provide a substantially continuous cutting action but with not more than one element cutting at any given time. The load on the cutter is therefore reduced to a minimum and is maintained substantially constant.

The elements are preferably substantially flat plates disposed square to the ground when in their cutting positions. Accordingly, since each element imparts a discrete impulse to the grass cuttings, there is no longer any tendency for the grass cuttings to be thrown to one side of a grass collection box. The efficiency of the grass collection process is therefore substantially increased. Moreover, the discrete cutting plates have a tendency to "snatch-up" long grass prior to cutting it. This contrasts with the action of a continuous helical blade which tends to lay down the grass.

The cutter is preferably used in conjunction with a fixed bottom blade tangential to the body of revolution but with a predetermined gap between the fixed and rotating blades so that each element provides a predominantly shear cutting action. At higher rotational speeds, however, it might be possible to dispense with the bottom blade and rely upon a flail-type cutting action.

Each discrete segment of the cylinder can be described by more than one cutting element (or by a double-ended cutting element) so that, for example, one set of cutting elements (or one set of ends) may be effective during one half of a revolution, and another set of elements (or ends) during the second half of the revolution.

The cutting elements may comprise discrete modules mounted on a common drive shaft so that different width cutting cylinders can be manufactured merely by varying the number of modules.

By way of example only, an embodiment of the invention will now be described with reference to the accompanying drawings in which

Fig. 1 is a schematic end elevation of a cutting cylinder for a lawnmower,

Fig. 2 is a schematic front view of the cutting cylinder, and

Fig. 3 is a detail of a double-ended cutting element.

Referring to these Figures, the cylinder consists of a drive shaft 10 carrying twelve 25 mm double-ended cutting elements to provide a combined cutting width of 30 cm.

The cutting elements are identical but are disposed on the shaft 10 with a progressive stagger simulating two helical blades.

Each element consists of a hub portion 14 carrying a pair of opposed radially extending blades 11. Each hub has a central bore for receiving the shaft 10. In use, the shaft is mounted for rotation about a generally horizontal axis between the side plates of a conventional cylinder lawnmower, and is normally driven by a petrol or electric motor through a suitable transmission. For simplicity, these conventional components have been omitted from the drawings.

The two sets of radially extending blades 11a-11l are progressively staggered at 15 degree intervals around the periphery of the shaft to simulate a pair of helical blades. The rotating blades are thus brought in sequence to cooperate with a fixed bottom blade 15 positioned tangentially to the cutting cylinder but with a small clearance gap to provide a shear cutting action.

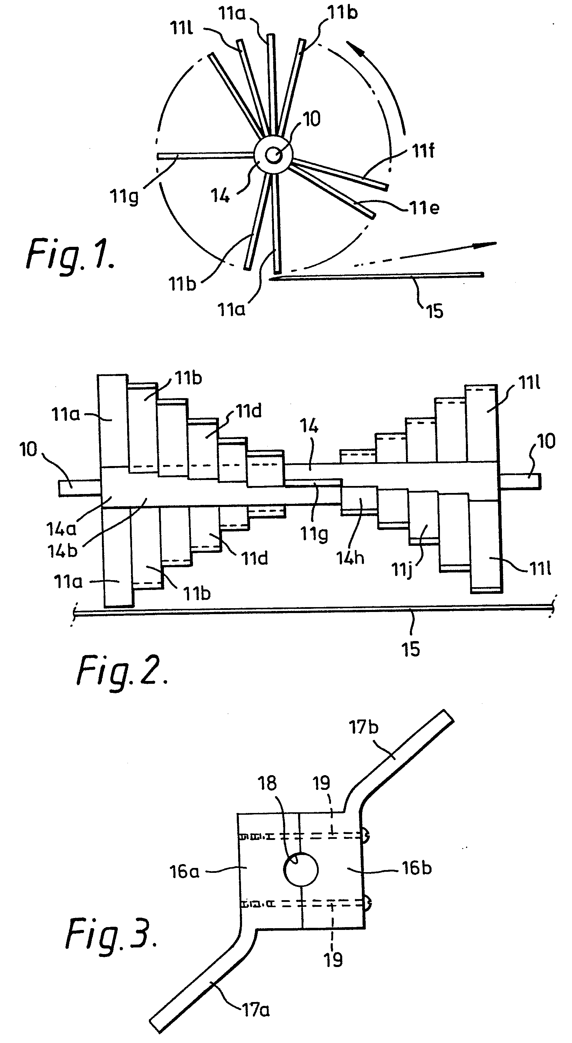

Fig. 3 shows a prototype cutting element with a split hub 16a, 16b, the two halves being bolted together by tie bolts 19 and each having a depending blade 17a, 17b. Each half is also recessed to provide the central bore 18.

The radial blades are generally rectangular plates although the outer ends of the plates may be curved or angled in any desired manner to facilitate the cutting action between each blade and the fixed bottom blade. The outer ends might be curved, for example, to provide a progressive cutting action similar to that of a conventional helical blade. It has been found however that a square cutting edge gives equally good results. In either case the face of the blade remains generally normal to the cutting edge so that the grass cuttings are impelled by the blades either directly forwards or directly backwards (depending on the sense of rotation) into a grass collection box. There is no tendency for the grass cuttings to be displaced to one side as in a conventional cylinder mower with helical blades.

The radial blades may have a degree of flexibility or resilience such that each blade flexes only under an abnormal load such as might be caused, for example, by a stone becoming caught between the fixed blade and the rotating blade. The flexibility should be sufficient to allow removal of the stone or other obstruction without permanent deformation of the blade. The same effect might be achieved with a rigid blade and a mechanical hinge.

Since each double-ended rotating blade comprises a discrete module, the modules may be interlocked with a built-in stagger between the blades of adjacent modules.

To avoid damaging the rotating blades if the fixed blade is subjected to a force urging it into the path of the rotating blades, a number of rigid spacing discs can be mounted on the drive shaft and interspersed between the blades across the width of the cutting cylinder.

CLAIMS

1. A cutter for a lawnmower, the cutter being rotatable about a generally horizontal axis and comprising a plurality of discrete cutting elements successively disposed along the said axis, each element describing a discrete segment of a body of revolution, such as a cylinder, generated by a straight line.

2. A cutter according to claim 1 in which the elements are staggered around the said axis in a predetermined sequence such that each element is brought in turn to its respective cutting position as the cutter is rotated.

3. A cutter according to claim 2 in which the staggering of the elements is such that the individual cuts of each element closely follow one another to provide a substantially continuous cutting action but with not more than one element cutting at a given time.

4. A cutter according to claim 3 in which the staggering of the elements is a regular, progressive staggering to simulate at least one helical blade.

5. A cutter according to any one of the preceding claims in which each element comprises a substantially flat plate extending outwardly from the said axis, each plate being disposed square to the periphery of the body of the revolution.

6. A cutter according to any one of the preceding claims in which each discrete segment of the body of revolution is further described by a second cutting element.

7. A cutter according to claim 6 in which each of the first cutting elements move through their cutting positions during one half of a revolution of the cutter, and each of the second cutting elements move through their cutting positions during the second half of the revolution.

8. A cutter according to any one of the preceding claims in which the cutting elements comprise discrete modules mounted on a common drive shaft.

9. A cutter according to claim 8 in which each module carries at least two diametrically opposed cutting blades.

10. A cylinder lawnmower having a pair of spaced apart side plates for rotatably mounting a cutting cylinder, and a fixed bottom blade positioned tangentially to the cutting cylinder, the cylinder comprising a cutter according to any one of the claims 1 to 9.

Fig.1.

Fig.2.

Fig.3.

European Patent Office

**EUROPEAN SEARCH REPORT**

0071424

Application number

EP 82303885.6

| Category | Citation of document with indication, where appropriate, of relevant passages | Relevant to claim |
|---|---|---|
| | **DOCUMENTS CONSIDERED TO BE RELEVANT** | |
| X | <u>US - A - 2 479 937</u> (G.F. KNOWLES)<br>* Totality *<br>-- | 1-4,6-10 |
| X | <u>US - A - 3 084 493</u> (J.B. KUCERA)<br>* Totality *<br>-- | 1-4,8 |
| A | <u>GB - A - 995 460</u> (THOMAS JAMES SNELL)<br>* Fig. 3-6 *<br>---- | 1-5,8 |

**CLASSIFICATION OF THE APPLICATION (Int. Cl. ³)**

A 01 D 53/02

A 01 D 55/20

**TECHNICAL FIELDS SEARCHED (Int.Cl. ³)**

A 01 D 35/00

A 01 D 50/00

A 01 D 53/00

A 01 D 55/00

X The present search report has been drawn up for all claims

| Place of search | Date of completion of the search | Examiner |
|---|---|---|
| VIENNA | 22-10-1982 | LANGER |

EPO Form 1503.1  06.78